# EUROPEAN PATENT APPLICATION

(11) **EP 2 058 931 A2**
(43) Date of publication of application: **13.05.2009**
(21) Application number: 08253664.0
(22) Date of filing: 07.11.2008
(51) Int. Cl.: H02M 3/335

(54) **Power supply circuit**

(30) Priority: 07.11.2007 CN 200710124287
(71) Applicant: Innolux Display Corporation, Chu-Nan 350 Miao li (TW)
(72) Inventor: Lin, Ching-Chung, Miao-Li Country (TW)
(74) Representative: Stuttard, Garry Philip

(57) **Abstract**

An power supply circuit includes an input terminal, an output terminal, a plurality of voltage converting circuits, and a pulse width modulation circuit. The input terminal is configured for receiving a direct current voltage. The output terminal is configured for providing voltage to a load circuit. The plurality of voltage converting circuits are connected in parallel between the input terminal and the output terminal. The pulse width modulation circuit is configured to control the plurality of the voltage converting circuits to convert the direct current voltage into a plurality of pulse voltages. A phase of each pulse voltage is delayed than that of an adjacent front pulse voltage.

## Description

The present disclosure relates to a power supply circuit, and more particularly to a power supply circuit having a plurality of voltage converting circuits.

Power supply circuits are widely used in modem electronic devices, providing power voltage signals to enable function.

One such power supply circuit generally includes a voltage converting circuit for converting a provided alternating current (AC) voltage signal to a direct current (DC) voltage signal. The DC voltage signal is further provided to a load circuit, so as to enable the load circuit to function.

Typically, the voltage converting circuit can only converting the AC voltage into a DC pulse voltage, the DC pulse voltage must be filtered by a filter circuit. However, the DC pulse voltage has a relatively long low level period. When power supply circuit is functioning, a phase the output voltage has a relative high ripple. That is, the output of the power supply circuit is unstable.

Therefore, what is needed, is a light-emitting diode with a higher luminous efficiency.

In one exemplary embodiment, a power supply circuit includes an input terminal, an output terminal, a plurality of voltage converting circuits, and a pulse width modulation circuit. The input terminal is configured for receiving a direct current voltage. The output terminal is configured for providing voltage to a load circuit. The plurality of voltage converting circuits are connected in parallel between the input terminal and the output terminal. The pulse width modulation circuit is configured to control the plurality of the voltage converting circuits to convert the direct current voltage into a plurality of pulse voltages. A phase of each pulse voltage is delayed than that of an adjacent front pulse voltage.

Other advantages and novel features of the present invention will be drawn from the following detailed description of a preferred embodiment of the present invention with attached drawings, in which:

Many aspects of the present light-emitting diode can be better understood with reference to the following drawing. The components in the drawing are not necessarily drawn to scale, the emphasis instead being placed upon clearly illustrating the principles of the present light-emitting diode. Moreover, in the drawing like reference numerals designate corresponding parts throughout.

FIG. 1 is a diagram of a power supply circuit according to a first embodiment of the present disclosure.

FIG. 2 is waveforms of the power supply circuit of FIG. 1.

FIG. 3 is a diagram of a power supply circuit according to a second embodiment of the present disclosure.

FIG. 4 is waveforms of the power supply circuit of FIG. 3.

Reference will now be made to the drawings to describe exemplary embodiments of the present disclosure in detail.

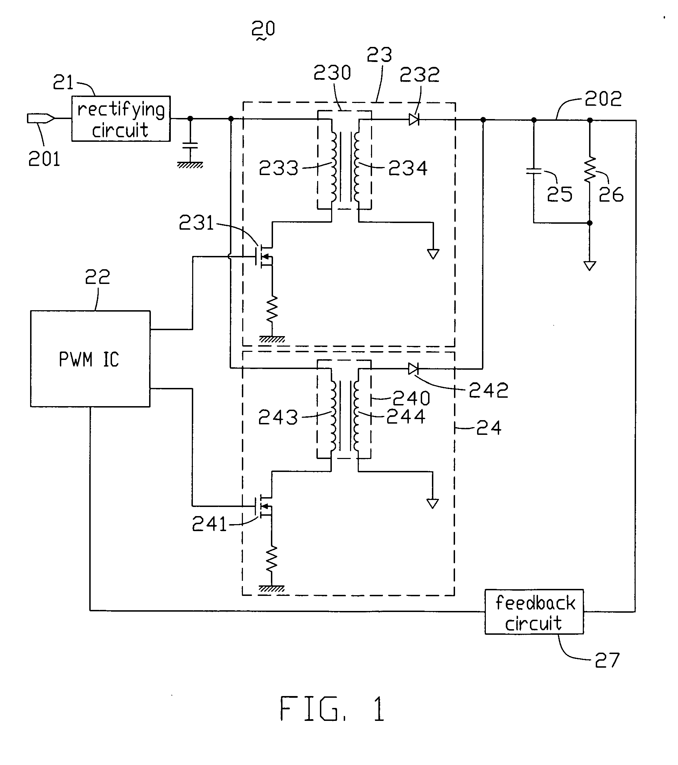

FIG. 1 is a diagram of a power supply circuit according to a first embodiment of the present disclosure. The power supply circuit 20 provides electric power to an electronic device, such as a liquid crystal display (LCD). In one embodiment, the power supply circuit 1 includes an input terminal 201, a rectifying circuit 21, a pulse width modulation integrated circuit (PWM IC) 22, a first voltage converting circuit 23, a second voltage converting circuit 24, a filter capacitor 25, a load circuit 26, a feedback circuit 27, and an output terminal 202.

The rectifying circuit 21 can, for example, be a full-bridge rectifying circuit or a half-bridge rectifying circuit. The PWM IC 22 is configured to supply voltage control signals with different phases to the first voltage converting circuit 23 and the second voltage converting circuit 24, respectively. The first and second voltage converting circuits 23, 24 are controlled to output pulse voltages with different phases according to the voltage control signals. The feedback circuit 27 detects the output voltage of the output terminal 202, and feeds back a feedback signal to the PWM IC 22.

The first voltage converting circuit 23 includes a first transformer 230, a first transistor 231, and a first rectifying diode 232. The first transformer 230 includes a first primary winding 233 and a first secondary winding 234.

The second voltage converting circuit 24 includes a second transformer 240, a second transistor 241, and a second rectifying diode 242. The second transformer 240 includes a second primary winding 243 and a second secondary winding 244.

The input terminal 201 is respectively connected to two first ends of the first and second primary windings 233, 243 via the rectifying circuit 21. An second end of the first primary winding 233 is connected to a drain electrode of the first transistor 231. An source electrode of the first transistor 231 is grounded via a resistor (not labeled). An gate electrode of the first transistor 231 is connected to the PWM IC 22. An end of the first secondary winding 234 is connected to the output terminal 202 via the positive electrode and negative electrode of the first rectifying diode 232 in series, the other end is grounded. An second end of the second primary winding 243 is connected to an drain electrode of the second transistor 241. An source electrode of the second transistor 241 is grounded via a resistor (not labeled). An gate electrode of the second transistor 241 is connected to the PWM IC 22. An end of the second secondary winding 234 is connected to the output terminal 202 via the positive electrode and negative electrode of the second rectifying diode 242, the other end is grounded. The filter capacitor 25 and the load circuit 26 are connected in parallel between the output terminal 202 and ground.

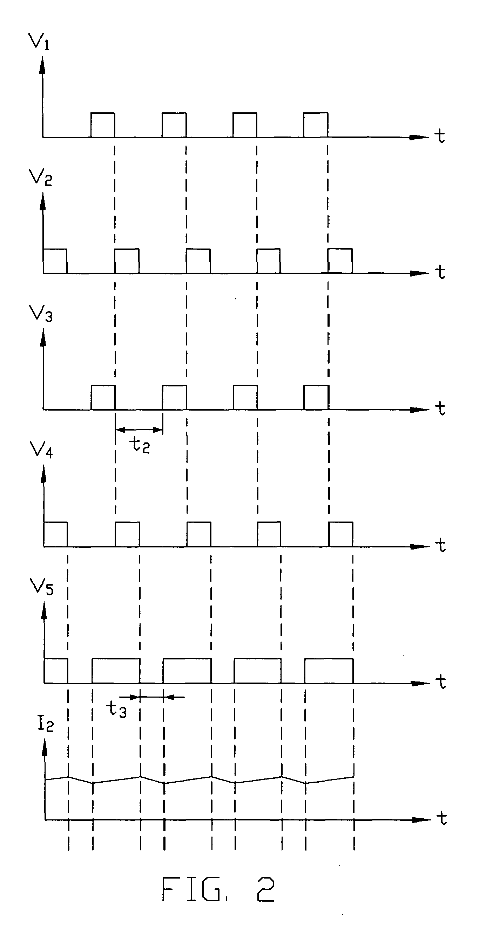

FIG. 2 shows waveforms of the power supply circuit 20. Curve V1, V2 represent voltages applied to the gate electrodes of the first and second transistor 231, 241 by the PWM IC 22, respectively. Curve V3, V4 represent voltages outputted from the first and second rectifying diodes 232, 242. Curve V5 represents voltage between two electrodes of the rectifying capacitor 25. Curve I2 represents electric current outputted from the output terminal 202.

When an external AC voltage is applied to the input terminal 201, the AC voltage is rectified into a DC voltage by the rectifying circuit 21, and is then applied to the first and second primary windings 233, 243. The PWM IC 22 generates and outputs two voltage control signals V1, V2 to the gate electrodes of the first and second transistor 231, 241. A phase of the control signal V1 has a delay compared with that of the control signal V2, for example 120.

Under control of the control signal V1, the first transistor 231 is switched on and off alternatively, and the rectified DC voltage is applied to the provided to the first primary winding 233 when the first transistor 231 is switched on. Then the first secondary winding 234 generates an induction voltage, and transmits the induction voltage to the first rectifying diode 232. The first rectifying diode 232 rectifies the induction voltage, thereby forming a first pulse voltage V3. In each pulse time period, a low level period of the pulse voltage V3 is t2. Similarly, under the control of the control signal V2, a second pulse voltage V4 is generated at the negative electrode of second rectifying diode 242. Because the phase of the control voltage V2 is delayed by a predetermined degree compared with that of the control voltage V1, as a result, a phase of the second pulse voltage V4 has a same delayed degree compared with the first pulse voltage V3. The delayed degree can, for example, be 120 degree.

The first and second pulse voltages V3, V4 are both applied to the filter capacitor 25, simultaneously. Because of the delayed degree, the high level period of the second pulse voltage V4 overlaps the low level period of the first pulse voltage V3, and the high level period of the first pulse voltage V3 overlaps the low level period of the second pulse voltage V4. That is, the first and second pulse voltages V3, V4 complement each other. Therefore, a composed pulse voltage V5 is formed and applied to the filter capacitor 25. In the composed pulse voltage V5, the high level period is prolonged, and the low level period is shortened. In this embodiment, the low level period of the composed pulse voltage V5 is t3, and t3<t2. During the high level period, the output terminal 202 provides electric power to the load circuit 26 and charges the filter capacitor 25, thereby storing electric power in the filter capacitor 25. The longer the high level period is, the more the electric power is stored in the filter capacitor 25. During the low level period t3, the filter capacitor 25 discharges, and functions as a power supply to provide electric power to the load circuit26. As a result, the filter capacitor 25 outputs a DC current I2 to drive the load circuit 26.

In the above disclosed embodiment, the power supply 20 includes a first voltage converting circuit 23 and a second voltage converting circuit 24. The first and second voltage converting circuits 23, 24 are controlled by the PWM IC 22 to generate the pulse voltages V3, V4. The phase of the second pulse voltage V4 is delayed by 120 degree compared with that of the first pulse voltage V3. The first and second pulse voltages V3, V4 are both provided to the filter capacitor 25. The high level period of the second pulse voltage V4 compensates part of the low level period of the first pulse voltage V3. Thereby, the low level period of the composed pulse voltage V5 is shortened, and the high level period thereof is prolonged. As a result, a voltage fall of the output terminal 202 is decreased, accordingly decreasing a ripple of the output voltage of the output terminal 202. The stability of the output of the power supply circuit 20 is increased.

Moreover, the filter capacitor 25 provides electric power to the load circuit 26 only in the time period t3, which is relatively short. This is helpful to decrease a working temperature of the filter capacitor 25 and prolong a lifetime of the filter capacitor 25. Furthermore, the first and the second voltage converting circuits 23, 24 define a push-pull output circuit. Thus the first and second transformers 230, 240 can work in relatively low frequencies. This decreases a magnetic loss and increases a power utilization of the power supply circuit 20.

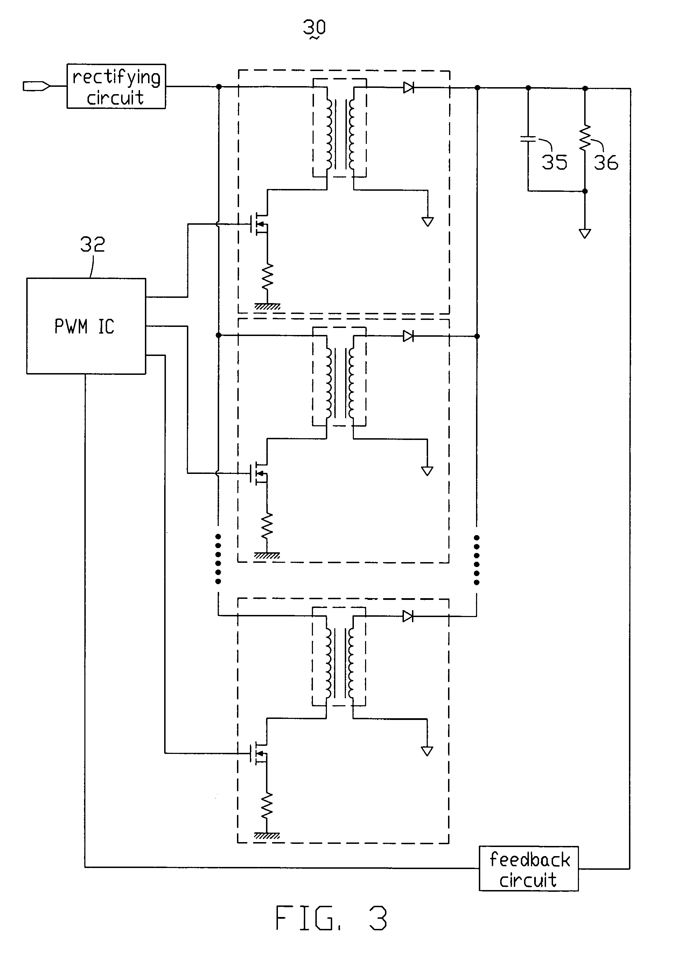

Referring to FIG. 3, this is a diagram of a power supply circuit according to a second embodiment of the present disclosure. The power supply 30 is similar to the power supply, only differing in that the power supply 30 includes a first, a second ....., and an Nth voltage converting circuits (not labeled), N represents a nature number which is larger than 2.

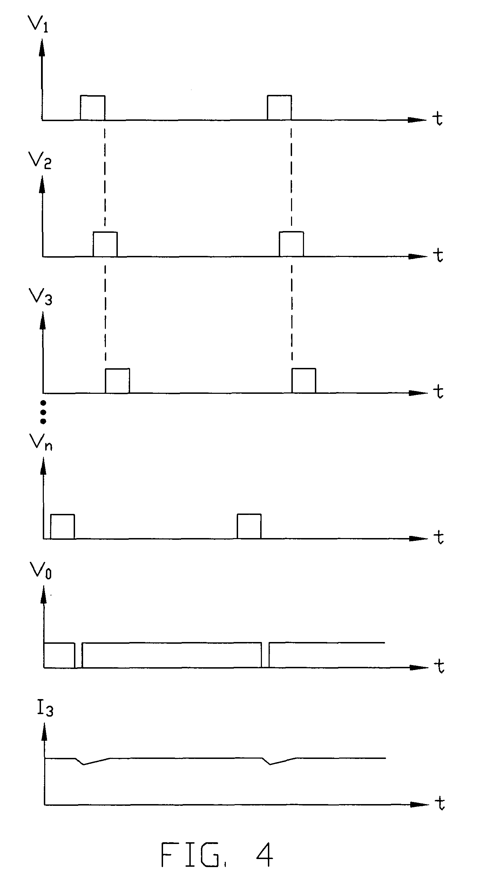

A PWM IC 32 is configured to provide N voltage control signals to control the N voltage converting circuits, respectively. In the N control signals, a phase of the Mth control signal is delayed by 360/(N+1) degrees than the (M-1)th voltage control signal, 2 ≤ M ≤ N. Also referring to FIG. 4, Under control of the N voltage control signals, the N voltage converting circuits generate N pulse voltages V1∼Vn, respectively, and provide the N pulse voltages V1∼Vn to a filter capacitor 35. The N pulse voltages V1∼Vn complement each other, thereby forming a composed pulse voltage V0.

The composed pulse voltage V0 has a prolonged high level period and a shortened low level period. When the number N is large enough, the low level period of the composed pulse voltage V0 approach zero, and the composed pulse voltage V0 can be recognized as a constant DC voltage, and directly provided to a load circuit 36. Thus, a capacitance of the filter capacitor 35 can be reduced to a low level, and the filter capacitor 35 even can be omitted.

While the present invention has been described as having preferred or exemplary embodiments, the embodiments can be further modified within the spirit and scope of this disclosure. This application is therefore intended to cover any variations, uses, or adaptations of the embodiments using the general principles of the invention as claimed. Further, this application is intended to cover such departures from the present disclosure as come within known or customary practice in the art to which the invention pertains and which fall within the limits of the appended claims or equivalents thereof.

## Claims

1. A power supply circuit comprising:
an input terminal configured for receiving a direct current voltage;
an output terminal configured for providing voltage to a load circuit;
a plurality of voltage converting circuits connected in parallel between the input terminal and the output terminal; and
a pulse width modulation circuit,
wherein the pulse width modulation circuit is configured to control the plurality of the voltage converting circuits to convert the direct current voltage into a plurality of pulse voltages, wherein a phase of each pulse voltage is delayed compared with that of an adjacent front pulse voltage.

2. A power supply circuit as claimed in claim 1 further comprising a rectifying circuit configured to receive alternating current voltage and output direct current voltage to the plurality of voltage converting circuits.

3. A power supply circuit as claimed in claim 1 or 2 further comprising a filter capacitor connected between the output terminal and ground.

4. A power supply circuit as claimed in any preceding claim, wherein each voltage converting circuit comprises a transformer with a primary winding and a secondary winding, a transistor and a rectifying diode, wherein an end of the primary winding is connected to the input terminal and the other end is connected to a drain electrode of the transistor, wherein a source electrode of the transistor is grounded and wherein an end of the secondary winding is grounded and the other end is connected to the output terminal via the rectifying diode.

5. A power supply circuit as claimed in claim 4, wherein each voltage converting circuit further comprises a resistor, wherein the source electrode of the transistor is grounded via the resistor.

6. A power supply circuit as claimed in any preceding claim further comprising a feedback circuit configured for feeding an output voltage signal of the output terminal back to the pulse width modulation circuit.

7. A power supply circuit as claimed in claim 1, further comprising a plurality of feedback circuits for feeding the pulse voltages back to the pulse width modulation circuit respectively.

8. A power supply circuit as claimed in any preceding claim, wherein the number of the voltage converting circuits is two and the phase delay between the two pulse voltages is 120 degrees.

9. A power supply circuit comprising:
an input terminal configured for receiving external voltage;
an output terminal configured for providing voltage to a load;
N voltage converting circuits connected in parallel between the input terminal and the output terminal, wherein N is a number larger than one; and
a pulse width modulation circuit configured to provide N voltage control signals respectively to the N voltage converting circuits, wherein a phase delay exists between each of two adjacent voltage control signals, wherein the voltage converting circuits generate N pulse voltages according to the N voltage control signal.

10. A power supply circuit as claimed in claim 9, further comprising a rectifying circuit configured to receive alternating current voltage and output direct current voltage to the N voltage converting circuits.

11. A power supply circuit as claimed in claim 9 or 10 further comprising a filter capacitor connected between the output terminal and ground.

12. A power supply circuit as claimed in claim 9, 10 or 11, wherein each voltage converting circuit comprises a transformer with a primary winding and a secondary winding, a transistor and a rectifying diode, wherein an end of the primary winding is connected to the input terminal and the other end is connected to a drain electrode of the transistor, wherein a source electrode of the transistor is grounded, wherein an end of the secondary winding is grounded and the other end is connected to the output terminal via the rectifying diode.

13. A power supply circuit as claimed in claim 12, wherein each voltage converting circuit further comprises a resistor, wherein the source electrode of the transistor is grounded via the resistor.

14. A power supply circuit as claimed in any of claims 9 to 13 further comprising a feedback circuit configured for feeding an output voltage signal of the output terminal back to pulse width modulation circuit.

15. A power supply circuit as claimed in claim 9, wherein the phase delay between each of two adjacent pulse voltages is 360/(N+1) degree.

16. A control method for a power supply circuit comprising:
generating N voltage control signals, wherein a phase delay exists between each of two adjacent voltage control signals;
generating N pulse voltages by N voltage converting circuits according to the N voltage control signals, wherein a phase delay exists between each of two adjacent pulse voltages; and
providing the N pulse voltages to a load.

17. A control method as claimed in claim 16, wherein the phase delay between each of two adjacent voltage control signals is 360/(N+1) degree.

18. A control method as claimed in claim 16, wherein the phase delay between each of two adjacent pulse voltages is 360/(N+1) degree.
